# FASCICULE DE BREVET EUROPEEN

(11) **EP 4 332 634 B1**
(45) Date de publication et mention de la délivrance du brevet: **14.10.2026**
(21) Numéro de dépôt: 23193799.6
(22) Date de dépôt: 29.08.2023
(51) Int. Cl.: G01S 19/41

(54) **PROCÉDÉ DE SÉLECTION D'AU MOINS UN FOURNISSEUR DE SERVICE DE NAVIGATION PAR SATELLITE ET SYSTÈME DE SÉLECTION ASSOCIÉ**
VERFAHREN ZUR AUSWAHL MINDESTENS EINES SATELLITENNAVIGATIONSDIENSTANBIETERS UND AUSWAHLSYSTEM DAFÜR
METHOD FOR SELECTING AT LEAST ONE SATELLITE NAVIGATION SERVICE PROVIDER AND ASSOCIATED SELECTION SYSTEM

(30) Priorité: 30.08.2022 FR 2208670
(43) Date de publication de la demande: 06.03.2024
(73) Titulaire: THALES, 92400 Courbevoie (FR)
(72) Inventeur: ARETHENS, Jean-Pierre, 26000 VALENCE (FR); BOUVET, Denis, 26000 VALENCE (FR)
(74) Mandataire: Lavoix

(56) Documents cités:
- DENNIS J ET AL: "Assessment of Methods to Trigger Transition Between Multiple SBAS", ITM 2014 - PROCEEDINGS OF THE 2014 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 29 January 2014 (2014-01-29), pages 201 - 211, XP056008079
- DENNIS JED ET AL: "Refinement of Broadcast Integrity Methods for Space Based Augmentation System Selection", ITM 2015 - PROCEEDINGS OF THE 2015 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 28 January 2015 (2015-01-28), pages 404 - 414, XP056008708
- DENNIS JED ET AL: "Selecting Among Dual Frequency Multiple Constellation (DFMC) Satellite-Based Augmentation Systems (SBAS) During En-route and Non-Precision Flight Operations", NAVIGATION: JOURNAL OF THE INSTITUTE OF NAVIGATION, INSTITUTE OF NAVIGATION, FAIRFAX, VA, US, vol. 63, no. 1, 26 January 2015 (2015-01-26), pages 65 - 83, XP056010793, ISSN: 0028-1522

## Description

La présente invention concerne un procédé de sélection d'au moins un fournisseur de service de navigation par satellite.

L'invention concerne en outre un système de sélection d'au moins un fournisseur de service de navigation par satellite.

L'invention concerne le domaine de la navigation par satellite, notamment pour des aéronefs.

De manière connue en soi, le système mondial de navigation par satellite, ou GNSS (de l'anglais pour « Global Navigation Satellite System ») permet d'obtenir une position géographique à partir de signaux émis par des satellites. On connait plusieurs constellations de satellites de base qui permettent l'introduction de services fondés sur le GNSS : le GPS, le GLONASS, Galileo et le système de navigation par satellite Beidou.

Pour l'utilisation de ces quatre constellations de base pour répondre aux besoins de l'aviation civile internationale, il convient de respecter des exigences bien particulières. Par exemple, les opérations basées sur l'utilisation de ces constellations selon les règles de vol aux instruments (IFR de l'anglais pour « Instrument Flight Rules ») réclament le renforcement (ou la surveillance) des signaux des constellations satellitaires de base afin de répondre aux exigences de sécurité et de fiabilité.

Il est connu de renforcer les signaux GNSS, par exemple par un système embarqué dans l'aéronef, également appelé ABAS (de l'anglais « Aircraft Based Augmentation System » pour Système d'augmentation basé sur un aéronef), par un système basé au sol, également appelé GBAS (de l'anglais « Ground Based Augmentation System » pour Système d'augmentation au sol), ou par un système d'augmentation satellitaire, également appelé SBAS (de l'anglais « Satellite Based Augmentation System » pour Système d'augmentation satellitaire).

Dans le cas des systèmes d'augmentation satellitaire, plusieurs fournisseurs de service SBAS pour l'augmentation des signaux des constellations de base sont connus. Ces services sont accessibles à tout utilisateur située dans la zone éclairée par les satellites, généralement en orbite géostationnaire (GEO), qui transmettent des données SBAS. Les zones géographiques ainsi éclairées étant larges et pouvant se recouvrir, certaines autorités étatiques peuvent imposer l'utilisation d'un fournisseur de service SBAS sur leur territoire ou a contrario interdire l'utilisation explicite d'un ou plusieurs fournisseurs de service SBAS.

Pour prendre en compte de tels critères pour le choix du fournisseur, il est possible de générer une base de données comprenant, pour un grand nombre de positions, le ou les fournisseurs à utiliser, sur la base de régions géopolitiques connues. Selon un autre exemple, il est possible de prédéfinir des régions géographiques complexes à partir des régions géopolitiques pour définir l'utilisation des fournisseurs de service SBAS.

Les documents « Assessment of Methods to Trigger Transition between Multiple SBAS », Dennis J et al., ITM 2014, « Refinement of Broadcast Integrity Methods for Space Based Augmentation System Selection », Dennis J et al., ITM 2015 et « Selecting Among Dual Frequency Multiple Constellation (DFMC) Satellite-Based Augmentation Systems (SBAS) During En-route and Non-precision Flight Operation », Dennis J et al., Navigation: Journal of the Institute of Navigation décrivent des exemples de solutions pour choisir entre des fournisseurs de service SBAS.

Toutefois, de telles solutions sont complexes. Par exemple, pour couvrir la totalité de la surface de la terre, le nombre de positions définies dans la base de données est très élevé, et la base de données est ainsi volumineuse.

Aussi, lors d'une modification d'un choix de fournisseur, par exemple d'une interdiction d'utiliser un fournisseur spécifique dans le territoire d'un pays donné, il est nécessaire de régénérer la base de données. Cette régénération implique souvent un coût calculatoire élevé.

Un objectif de la présente invention est d'au moins partiellement remédier aux inconvénients précités.

En particulier, un but de la présente invention est d'obtenir un procédé de sélection d'au moins un fournisseur de service de navigation par satellite, qui est simple et flexible.

A cet effet, l'invention a pour objet un procédé de sélection d'au moins un fournisseur de service de navigation par satellite parmi une pluralité de fournisseurs prédéterminés, le procédé de sélection étant mis en œuvre par ordinateur et comprenant :
- une étape de réception d'une position géographique ;
- une étape de détermination d'une indication relative à l'autorisation d'utilisation d'au moins un fournisseur de la pluralité de fournisseurs prédéterminés, l'étape de détermination étant mise en œuvre par au moins un réseau de neurones artificiels associé audit fournisseur, une variable d'entrée du réseau de neurones artificiels étant la position géographique, une variable de sortie du réseau de neurones artificiels étant ladite indication, l'indication étant choisie parmi l'autorisation de l'utilisation dudit fournisseur à ladite position géographique et l'interdiction de l'utilisation dudit fournisseur à ladite position géographique, lorsque l'indication indique l'autorisation de l'utilisation dudit fournisseur à ladite position géographique, le fournisseur étant appelé fournisseur autorisé ;
- une étape de sélection d'au moins un fournisseur pour une navigation par satellite d'un aéronef, parmi le ou chaque fournisseur autorisé.

Le procédé de sélection est particulièrement simple, car grâce au(x) réseau(x) de neurones artificiels, une ou plusieurs indications relative(s) à l'autorisation d'utilisation du fournisseur est/sont obtenue(s) pour la position géographique. Il est ainsi particulièrement simple d'obtenir le ou les fournisseur(s) autorisé(s).

Par ailleurs, lors d'une modification de l'autorisation ou de l'interdiction d'utiliser un fournisseur spécifique, il suffit de mettre à jour le réseau de neurones artificiels concerné.

En particulier, le procédé de sélection permet de sélectionner le ou les fournisseur(s) sans faire recours à une base de données complexe.

Aussi, le procédé de sélection est particulièrement fiable, car chaque réseau de neurones est associé à un fournisseur spécifique. Par conséquent, le réseau de neurones concerné est facilement adaptable pour ce fournisseur.

Par ailleurs, le procédé de sélection permet de vérifier une performance d'un réseau de neurones artificiels, c'est-à-dire une indication correspondant par exemple à une contrainte définie, de manière séparée pour ce réseau, en vérifiant la sortie de ce réseau de neurones artificiels pour des positions différentes.

Suivant d'autres aspects avantageux de l'invention, le procédé de sélection comprend une ou plusieurs des caractéristiques suivantes, prises isolément ou suivant toutes les combinaisons techniquement possibles :
- chaque fournisseur est un fournisseur de service SBAS ou un fournisseur de service GNSS ;
- l'étape de détermination est mise en œuvre par une pluralité de réseaux de neurones artificiels, chaque réseau de neurones artificiels étant associé à un fournisseur respectif de la pluralité de fournisseurs prédéterminés, la variable de sortie étant l'indication pour ledit fournisseur ;
- le ou chaque réseau de neurones artificiels comprend au moins une couche cachée comprenant une pluralité de nœuds, chaque nœud mettant en œuvre une fonction d'activation ;
- la fonction d'activation est formée par une fonction sigmoïde ;
- le ou chaque réseau de neurones artificiels comprend en outre une couche de sortie mettant en œuvre une fonction d'activation formée par une fonction logistique ;
- le procédé de sélection comprend en outre une étape de présélection des fournisseurs, lors de laquelle au moins un fournisseur est obtenu à partir de la pluralité de fournisseurs prédéterminés, en fonction d'une région d'activation prédéfinie pour ce fournisseur, le ou chaque fournisseur étant dit fournisseur activé lorsque la position géographique est comprise dans la région d'activation respective ;
- l'étape de détermination comprend la détermination de l'indication uniquement pour le ou chaque fournisseur activé, par le ou les réseau(x) de neurones artificiels associé(s) audit(s) fournisseur(s) activé(s) ;
- la région d'activation d'au moins un fournisseur de la pluralité de fournisseurs est dépourvue de positions géographiques ou est une région mondiale ;
- la position géographique est une position courante de l'aéronef ou une position de destination ;
- le procédé de sélection comprend une phase d'entraînement du ou de chaque réseau de neurones artificiels par apprentissage supervisé, comprenant la fourniture, au ou à chaque réseau de neurones artificiels, d'une pluralité de positions géographiques d'entraînement, et comprenant la fourniture de l'indication pour chaque position géographique d'entraînement ;
- l'indication fournie lors de la phase d'entraînement dépend, pour chaque position géographique d'entrainement, d'au moins un élément, de préférence de l'ensemble des éléments, suivant(s) : une contrainte d'utilisation de fournisseurs par au moins une autorité étatique à ladite position géographique d'entraînement, une disponibilité de corrections ionosphériques de signaux pour la position géographique d'entrainement, une région de couverture d'un ou plusieurs satellite(s) de l'un des fournisseurs de la pluralité de fournisseurs prédéterminés, une région d'activation prédéfinie pour l'un des fournisseurs de la pluralité de fournisseurs prédéterminés.
- le procédé de sélection comprend en outre une phase de vérification, comprenant :
   + une étape de fourniture au ou à chaque réseau de neurones artificiels d'une pluralité de positions géographiques de vérification ;
   + une étape d'obtention, pour chaque position géographique de vérification, de l'indication en sortie du réseau de neurones artificiels correspondant ;
   + une étape de comparaison de chaque indication obtenue lors de l'étape d'obtention avec une indication attendue pour la position géographique de vérification correspondante, pour obtenir un résultat de comparaison ;
   + une étape de calcul d'un taux de réussite du ou de chaque réseau de neurones artificiels en fonction du résultat de comparaison ;
- lorsque le taux de réussite est inférieur à un taux prédéterminé pour le réseau de neurones artificiels lors de l'étape de calcul, la région d'activation est divisée en plusieurs sous-régions, et dans lequel l'étape de fourniture, l'étape d'obtention et l'étape de comparaison sont répétées pour chaque sous-région.

L'invention a également pour objet un système de sélection d'au moins un fournisseur de service de navigation par satellite parmi une pluralité de fournisseurs prédéterminés, le système de sélection comprenant :
- un module de réception configuré pour recevoir une position géographique ;
- un module de détermination configuré pour déterminer une indication relative à l'autorisation d'utilisation d'au moins un fournisseur de la pluralité de fournisseurs prédéterminés, le module de détermination comprenant au moins un réseau de neurones artificiels associé audit fournisseur, une variable d'entrée du réseau de neurones artificiels étant la position géographique, une variable de sortie du réseau de neurones artificiels étant ladite indication, l'indication étant choisie parmi l'autorisation de l'utilisation dudit fournisseur à ladite position géographique et l'interdiction de l'utilisation dudit fournisseur à ladite position géographique, lorsque l'indication indique l'autorisation de l'utilisation dudit fournisseur à ladite position géographique, le fournisseur étant appelé fournisseur autorisé ;
- un module de sélection configuré pour sélectionner au moins un fournisseur pour une navigation par satellite d'un aéronef, parmi le ou chaque fournisseur autorisé.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'une partie d'un aéronef comprenant un système de sélection d'au moins un fournisseur de service de navigation par satellite selon l'invention ;
[Fig 2] la figure 2 est un ordinogramme d'un procédé de sélection d'au moins un fournisseur de service de navigation par satellite selon l'invention, mis en œuvre par le système de sélection de la figure 1 ;
[Fig 3] la figure 3 est une représentation schématique d'une carte géographique comprenant une pluralité de régions d'activation de fournisseurs sélectionnés par le procédé de sélection de la figure 2 ;
[Fig 4] la figure 4 est une représentation schématique d'une carte géographique comprenant des indications relatives à l'autorisation d'utilisation d'un fournisseur de service spécifique, à une pluralité de positions géographiques d'entraînement, pour l'entraînement d'un réseau de neurones artificiels du système de sélection de la figure 1 ;
[Fig 5] la figure 5 est une représentation schématique d'une carte géographique comprenant, pour une pluralité de positions géographiques, l'indication obtenue par le réseau de neurones artificiels du système de sélection de la figure 1 pour un fournisseur spécifique.

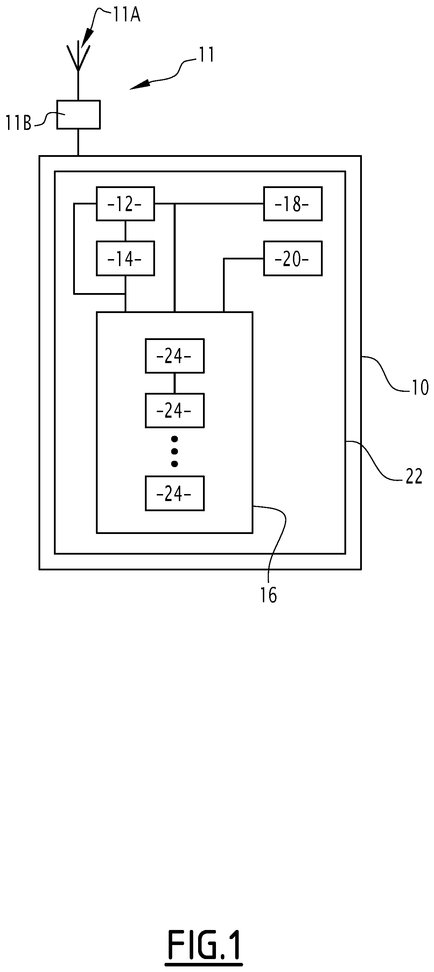

En référence à la figure 1, un système de sélection 10 est configuré pour sélectionner au moins un fournisseur de service de navigation par satellite parmi une pluralité de fournisseurs prédéterminés, par exemple enregistrés dans une base de données, non représentée.

Par « fournisseur », il est entendu en particulier un opérateur d'une constellation de satellites fournissant un service prédéfini.

Par exemple, chaque fournisseur est un fournisseur de service SBAS.

Par « fournisseur de service SBAS », il est entendu un fournisseur de service d'un système d'augmentation satellitaire, ou SBAS (de l'anglais « Satellite Based Augmentation System ») d'une ou plusieurs constellations de satellite de base.

Selon un autre exemple, chaque fournisseur est un fournisseur de service de constellation de base.

Par « fournisseur de service de constellation de base », il entendu un fournisseur de service de géolocalisation et navigation par une constellation de satellites configurés pour transmettre des signaux GNSS (de l'anglais pour « Global Navigation Satellite System » pour système mondial de navigation par satellite, dont le sigle est GNSS). De telles constellations sont par exemple : le GPS, le GLONASS, Galileo et le système de navigation par satellite Beidou.

Chaque fournisseur de service est apte à transmettre des données correspondantes par les satellites associés à ce fournisseur. Chaque fournisseur de service est ainsi en particulier un fournisseur de données techniques pour la navigation basée sur des satellites.

Par exemple, chaque fournisseur de service SBAS est apte à transmettre, via le ou les satellites correspondant(s), des données SBAS, comprenant par exemple des données relatives à l'intégrité des signaux GNSS.

Le système de sélection 10 est de préférence embarqué, par exemple embarqué dans un aéronef, non représenté. En variante, certains modules du système de sélection 10 sont embarqués, et certains modules sont intégrés dans un équipement non embarqué, au sol. Le système de sélection 10 est par exemple au moins partiellement intégré dans un équipement distinct d'un récepteur GNSS 11 de l'aéronef. Par exemple, le système de sélection 10 est au moins partiellement intégré dans le système de gestion de vol, ou FMS (de l'anglais « Flight Management System »).

Le système de sélection 10 est par exemple connecté au récepteur GNSS 11. Le récepteur GNSS 11 comprend par exemple au moins une antenne 11A configurée pour recevoir des signaux GNSS et en outre une unité de traitement 11B configurée pour déterminer une position géographique à partir de ces signaux GNSS, et par exemple pour transmettre cette position au système de sélection 10.

Selon un exemple non représenté, le système de sélection 10 est intégré dans le récepteur GNSS. Par exemple, dans ce cas, le système de sélection 10 et l'unité de traitement du récepteur GNSS sont intégrés dans un même boîtier.

Le système de sélection 10 comprend par exemple un module de réception 12, un module de présélection 14, un module de détermination 16, un module de vérification 18 et un module de sélection 20.

Lorsque le système de sélection 10 est partiellement intégré dans un équipement distinct du récepteur GNSS de l'aéronef, par exemple les modules de réception 12, de présélection 14, de détermination 16, et de vérification 18 sont intégrés dans cet équipement distant, et le module de sélection 20 est intégré dans le récepteur GNSS de l'aéronef. Dans ce cas, le module de détermination 16 est configuré pour fournir au module de sélection 20, intégré dans le récepteur GNSS, une indication relative à l'autorisation d'utilisation du ou des fournisseur(s) de données.

Le module de réception 12 est configuré pour recevoir une position géographique.

La position géographique est par exemple une position courante de l'aéronef. Dans ce cas, la position géographique est par exemple fournie par un récepteur GNSS, par un système de navigation par inertie, par un dispositif de mesure de distance, dont le sigle est DME (de l'anglais pour « Distance Measuring Equipment »), ou par une combinaison de ces éléments.

Selon un autre exemple, la position géographique est une position de destination, par exemple d'un seuil de piste d'atterrissage.

Le module de présélection 14 est configuré pour présélectionner des fournisseurs à partir de la pluralité de fournisseurs prédéterminés.

Le module de détermination 16 est configuré pour déterminer l'indication relative à l'autorisation d'utilisation du ou des fournisseur(s) de données.

L'indication est en particulier spécifique pour un fournisseur donné de la pluralité de fournisseurs.

L'indication est choisie parmi l'autorisation de l'utilisation du fournisseur à la position géographique et l'interdiction de l'utilisation du fournisseur à la position géographique. Lorsque l'indication indique l'autorisation de l'utilisation du fournisseur à la position géographique, le fournisseur est appelé fournisseur autorisé dans la suite.

L'indication est de préférence une valeur binaire.

Par exemple, lorsque l'indication indique l'autorisation de l'utilisation du fournisseur, elle est égale à « 0 », et lorsqu'elle indique l'interdiction de l'utilisation du fournisseur, elle est égale à « 1 ».

Le module de vérification 18 est configuré pour vérifier chaque indication déterminée par le module de détermination 16 avec une indication attendue correspondante.

Le module de vérification 18 est optionnel. En variante, le module de vérification 18 est intégré dans un équipement au sol, distinct d'un équipement embarqué dans l'aéronef.

Le module de sélection 20 est configuré pour sélectionner un ou plusieurs fournisseur(s) pour une navigation par satellite de l'aéronef.

Le module de réception 12, le module de présélection 14, le module de détermination 16, le module de vérification 18 et le module de sélection 20 sont chacun par exemple intégrés dans au moins un calculateur 22.

Dans ce cas, chacun des modules parmi le module de réception 12, le module de présélection 14, le module de détermination 16, le module de vérification 18 et le module de sélection 20 se présente au moins partiellement sous la forme d'un logiciel exécutable par un processeur et stocké dans une mémoire du calculateur 22.

En variante ou en complément, chacun des modules parmi le module de réception 12, le module de présélection 14, le module de détermination 16, le module de vérification 18 et le module de sélection 20 est intégré, au moins partiellement, dans un dispositif physique, tel que par exemple un circuit logique programmable, tel qu'un FPGA (de l'anglais « Field Programmable Gate Array »), ou encore sous la forme d'un circuit intégré dédié, tel qu'un ASIC (de l'anglais « Application Specific Integrated Circuit »).

Le module de détermination 16 comprend au moins un réseau de neurones artificiels 24, appelé réseau de neurones 24 dans ce qui suit.

De préférence, le module de détermination 16 comprend plusieurs réseaux de neurones 24, par exemple un réseau de neurones 24 pour chaque fournisseur de service.

En particulier, chaque réseau de neurones 24 est associé à un fournisseur de service correspondant.

Chaque réseau de neurones 24 est configuré pour recevoir comme variable d'entrée la position géographique, et pour fournir comme variable de sortie l'indication relative à l'autorisation d'utilisation du fournisseur auquel ce réseau est associé.

Chaque réseau de neurones 24 comprend par exemple trois couches. Par exemple chaque réseau de neurones 24 comprend une couche d'entrée, par exemple à deux nœuds, configuré pour normaliser la position géographique reçue en entrée. Chaque réseau de neurones 24 comprend par exemple en outre au moins une couche cachée, de préférence une couche ou plusieurs couche cachée(s), et une couche de sortie.

Un procédé de sélection 100 va maintenant être décrit, ce procédé étant mis en œuvre par le système de sélection 10. Le procédé de sélection 100 est ainsi mis en œuvre par ordinateur.

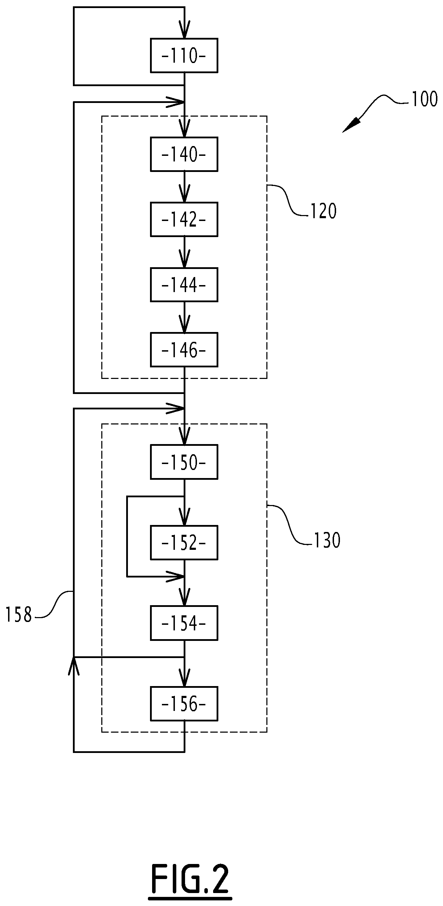

En référence à la figure 2 comprenant un ordinogramme du procédé de sélection 100, le procédé comprend par exemple une phase d'entraînement 110, une phase de vérification 120 et une phase d'exploitation 130.

Le procédé de sélection 100 est décrit dans ce qui suit pour plusieurs réseaux de neurones 24. En variante, le procédé de sélection 100 est mis en œuvre par un seul réseau de neurones 24.

La phase d'entraînement 110, et optionnellement la phase de vérification 120, est/sont mise(s) en œuvre de préférence par un équipement non embarqué dans l'aéronef, et/ou au préalable d'un vol de l'aéronef.

La phase d'exploitation 130 est de préférence mise en œuvre par le système de sélection 10 lorsqu'il est embarqué dans l'aéronef. Par exemple, la phase d'entraînement 110 ou la phase de vérification 120 comprend une transmission de paramètres de chaque réseau de neurones 24 et/ou des régions d'activation à un équipement embarqué dans l'aéronef pour une mise en œuvre de la phase d'exploitation 130. Ces paramètres sont par exemples des poids et biais, dont des exemples sont décrits ci-dessous, de nœuds des réseaux de neurones 24.

Lors de la phase d'entraînement 110, chaque réseau de neurones 24 est entraîné, de préférence par apprentissage supervisé.

De préférence, la phase d'entraînement 110 est mise en œuvre séparément pour chaque réseau de neurones 24.

Par exemple, la phase d'entraînement 110 est mise en œuvre uniquement pour une région d'activation du fournisseur associé au réseau de neurones 24 donné.

Par « région d'activation », il est entendu une région prédéfinie. Selon un exemple, la région de région d'activation est définie par le fournisseur. Par exemple, le fournisseur garantit une qualité de service, par exemple quant à l'intégrité d'informations fournies, dans la région d'activation. Selon un autre exemple, la région d'activation comprend la région de service prédéfinie par le fournisseur, et comprend en outre d'autres régions, dans lesquelles le service est également utilisable.

La région d'activation est en particulier différente d'une région dans laquelle les signaux d'un fournisseur donné sont recevables. Par exemple, dans le cadre d'un fournisseur SBAS comprenant un ou plusieurs satellites géostationnaires, un récepteur est apte à capter les signaux du fournisseur dans une région plus grande que la région d'activation de ce fournisseur.

Par exemple, chaque région d'activation forme un rectangle.

De préférence, les régions d'activation se chevauchent au moins partiellement. Ainsi, certaines positions géographiques sont comprises dans les régions d'activation d'au moins deux fournisseurs différents, permettant ainsi d'éventuellement utiliser chacun de ces fournisseurs pour une navigation lorsqu'aucune contrainte ne l'interdit.

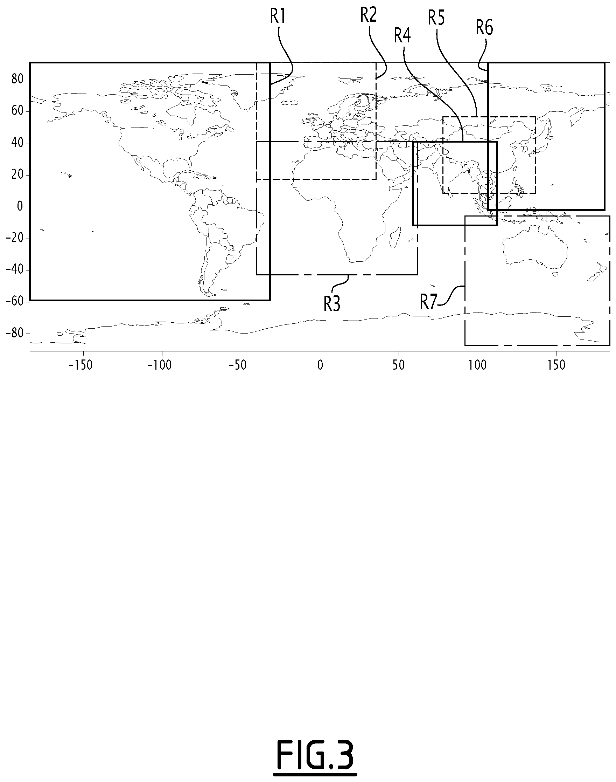

La figure 3 montre une carte comprenant des différentes régions d'activation pour des fournisseurs SBAS. Par exemple, une première région d'activation R1 est définie par le fournisseur SBAS appelé système WAAS, couvrant notamment l'Amérique du Nord et du Sud. Une seconde région d'activation R2 est définie par le fournisseur SBAS appelé système EGNOS, couvrant notamment l'Europe. Des régions d'activation d'autres fournisseurs SBAS sont désignés par les références R3 à R7 sur la figure 3.

La phase d'entraînement 110 comprend la fourniture, à chaque réseau de neurones artificiels 24, d'une pluralité de positions géographiques d'entraînement, ainsi que de l'indication pour chaque position géographique d'entraînement.

Chaque position géographique d'entraînement est par exemple définie par un utilisateur ou déterminée selon une fonction prédéterminée.

De préférence, l'échantillonnage des positions géographiques d'entraînement est irrégulier. Par « irrégulier », il est entendu que la distance entre deux positions géographiques d'entraînement voisines est variable.

Par exemple, le nombre de positions géographiques d'entraînement est augmenté dans une zone comprenant une transition entre l'indication égale à « 1 » et l'indication égale à « 0 ». Par exemple, lors d'une détection lors de la phase d'entraînement 110 d'une transition de l'indication entre « 1 » et « 0 » entre deux positions géographiques d'entraînement, la phase d'entraînement 110 est répétée, en ajoutant un nombre prédéterminé de positions géographiques d'entraînement additionnelles agencées entre ces deux positions. Lors de la répétition de la phase d'entraînement 110, le réseau de neurones 24 donné reçoit les positions géographiques d'entraînement additionnelles, ainsi que l'indication pour chacune de ces positions.

En dehors de zones comprenant une transition entre l'indication égale à « 1 » et l'indication égale à « 0 », la distribution des positions géographiques d'entraînement est de préférence régulière.

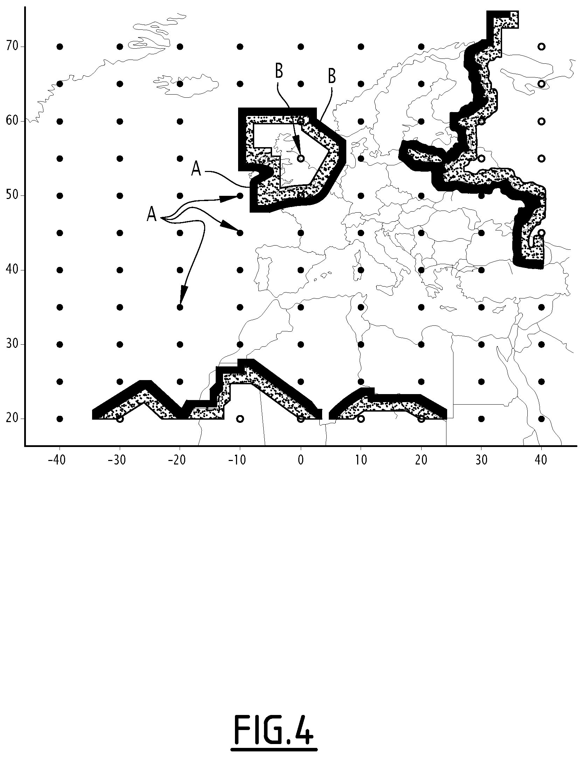

La figure 4 montre une carte géographique illustrant un exemple de positions géographiques d'entraînement A, B pour le système EGNOS.

La carte comprend des premières positions géographiques d'entraînement A, auxquelles l'utilisation du système EGNOS est autorisée. Ces premières positions géographiques d'entraînement A sont illustrées par des points noirs sur la figure 4.

La carte comprend en outre des deuxièmes positions géographiques d'entraînement B, auxquelles l'utilisation du système EGNOS est interdite. Ces deuxièmes positions géographiques d'entraînement B sont illustrées par des cercles sur la figure 4. A titre d'exemple, les deuxièmes positions géographiques d'entraînement B sont positionnées sur le territoire du Royaume-Uni, sur certaines parties d'Afrique et de la Russie dans l'exemple de la figure 4.

La figure 4 illustre en outre l'augmentation du nombre de positions géographiques d'entraînement A, B dans les zones de la transition de l'indication entre « 1 » et « 0 ». Par exemple, l'utilisation du système EGNOS étant interdite sur le territoire du Royaume-Uni, le nombre de positions géographiques d'entraînement A, B est augmenté autour du Royaume-Uni. Cela est en particulier visible sur la figure 4 par une bande pointée, correspondant à une accumulation de deuxièmes positions géographiques d'entraînement B, et par une bande noire, correspondant à une accumulation de premières positions géographiques d'entraînement A.

L'indication fournie lors de la phase d'entraînement 110 dépend, pour chaque position géographique d'entrainement, d'au moins un élément, de préférence de l'ensemble des éléments, suivant(s) pour le fournisseur auquel le réseau de neurones 24 est associé :
- une contrainte d'utilisation du fournisseur par au moins une autorité étatique à la position géographique d'entraînement ;
- une disponibilité des corrections ionosphériques de signaux, en particulier de signaux GNSS, pour la position géographique d'entraînement ;
- une région de couverture d'un ou plusieurs satellite(s) du fournisseur, et
- la région d'activation prédéfinie pour le fournisseur.

Par « contrainte d'utilisation », il est entendu une obligation ou interdiction d'utiliser un fournisseur spécifique par exemple sur un territoire d'un état comprenant la position géographique.

La disponibilité de corrections ionosphériques de signaux correspond à la disponibilité, à la position géographique d'entraînement A, B, d'un modèle de correction des retards de transmission des signaux GNSS causés par l'ionosphère dont les paramètres et la région d'application sont par exemple transmis dans les données SBAS.

Par « disponibilité de corrections », il est entendu en particulier la disponibilité a priori de ces corrections à la position géographique d'entraînement. Par exemple, la disponibilité dépend de données obtenues du fournisseur de service SBAS, en considérant les positions pour lesquelles le service transmet habituellement des corrections comme des positions auxquelles les corrections ionosphériques sont disponibles, et les autres positions comme des positions auxquelles les corrections ionosphériques sont indisponibles.

De préférence, la disponibilité de corrections est une donnée statique. En particulier, la disponibilité de corrections est indépendante d'une correction ionosphérique effective à la position géographique d'entrainement lors de la mise en œuvre du réseau de neurones 24 du fournisseur concerné. En d'autres termes, par exemple, cette disponibilité ne reflète pas nécessairement l'état courant des corrections ionosphériques au moment où le réseau de neurones 24 est mis en œuvre ; il ne s'agit donc pas d'une adaptation en temps réel de la sélection du fournisseur de service SBAS en fonction des corrections transmises.

La région de couverture d'un ou plusieurs satellite(s) du fournisseur est la région dans laquelle les signaux de ce ou ces satellite(s) sont recevables. En particulier, la taille de la région d'activation d'un fournisseur donné est inférieure à la taille de la région de couverture de ce fournisseur. Notamment, la région d'activation est comprise dans la région de couverture.

Selon un exemple, la région de couverture est formée par plusieurs satellites du même fournisseur de service. Dans ce cas, la région de couverture, dont dépend l'indication fournie lors de la phase d'entraînement 110, comprend par exemple des zones géographiques dans lesquelles plusieurs satellites du même fournisseur de service sont configurés pour fournir un signal.

Lors de la phase de vérification 120, le module de vérification 18 vérifie les indications fournies en sortie de chaque réseau de neurones 24.

La phase de vérification 120 est de préférence mise en œuvre pour chaque réseau de neurones 24. Dans ce qui suit, la phase de vérification 120 est décrite pour l'un des réseaux de neurones 24, par exemple le réseau de neurones 24 associé au fournisseur SBAS du système EGNOS. La phase de vérification 120 pour les autres réseaux de neurones 24 est de préférence identique.

La phase de vérification 120 comprend une étape de fourniture 140, une étape d'obtention 142, une étape de comparaison 144 et une étape de calcul 146.

Lors de l'étape de fourniture 140, le réseau de neurones 24 reçoit une pluralité de positions géographiques de vérification. Les positions géographiques de vérification sont par exemple déterminées par un utilisateur ou des positions prédéterminées, par exemple selon un maillage régulier selon lequel chaque position présente une distance identique à une position voisine.

Lors de l'étape d'obtention 142, le réseau de neurones 24 fournit en sortie, pour chaque position géographique de vérification reçue en entrée, l'indication.

Lors de l'étape de comparaison 144, le module de vérification 18 compare chaque indication obtenue lors de l'étape d'obtention 142 avec une indication attendue pour la position géographique de vérification correspondante, pour obtenir un résultat de comparaison. Par exemple, lorsque l'indication obtenue est identique à l'indication attendue, le résultat de comparaison est égal à « 1 », et lorsque l'indication obtenue diffère de l'indication attendue, le résultat de comparaison est « 0 ».

Lors de l'étape de calcul 146, le module de vérification 18 calcule un taux de réussite du réseau de neurones 24 en fonction du résultat de comparaison. Par exemple, lorsque chaque indication obtenue est égale à l'indication attendue, le taux de réussite correspond à un pourcentage égal à 100%. Lorsque la moitié des indications obtenues lors de l'étape d'obtention 142 sont égales aux indications attendues correspondantes, le taux de réussite correspond à un pourcentage égal à 50%.

Selon un exemple, si le taux de réussite est inférieur à un taux prédéterminé pour un nombre de nœuds prédéterminé du réseau de neurones 24, la région d'activation est divisée en plusieurs sous-régions. Le taux prédéterminé correspond par exemple à un pourcentage strictement supérieur à 99%. Le procédé de sélection 100, en particulier la phase d'entraînement 110 et la phase de vérification 120, est(sont) ensuite répété(es) pour chaque sous-région. En particulier, l'étape de fourniture 140, l'étape d'obtention 142 et l'étape de comparaison 144 sont répétées pour chaque sous-région.

Cela permet en particulier d'améliorer le taux de réussite des réseaux de neurones 24.

La phase d'exploitation 130 est de préférence mise en œuvre comme suite à au moins une mise en œuvre de la phase d'entraînement 110 et/ou de la phase de vérification 120.

La phase d'exploitation 130 comprend une étape de réception 150, une étape de présélection 152, une étape de détermination 154 et une étape de sélection 156.

Lors de l'étape de réception 150, le module de réception 12 reçoit la position géographique.

Lors de l'étape de présélection 152, le module de présélection 14 présélectionne au moins un fournisseur à partir de la pluralité de fournisseurs prédéterminés, en fonction de la région d'activation prédéfinie pour ce fournisseur. Chaque fournisseur est présélectionné lorsque la position géographique est comprise dans la région d'activation respective. Chaque fournisseur ainsi présélectionné est appelé fournisseur activé.

En référence à la figure 3, lorsque la position géographique est aux Etats-Unis, seulement le fournisseur SBAS appelé WAAS, définissant la région d'activation R1, est un fournisseur activé. Les autres fournisseurs, par exemple le fournisseur SBAS appelé EGNOS, définissant la région d'activation R2, n'est pas présélectionné, et ne forme donc pas un fournisseur activé.

Selon un exemple, lors de l'étape de présélection 152, au moins l'une des régions d'activation est dépourvue de positions géographiques. En particulier, cette région d'activation ne comprend aucune position géographique dans laquelle le fournisseur, pour lequel la région d'activation est définie, forme l'un parmi le ou les fournisseur(s) activé(s). Cette région d'activation correspond par exemple un opérateur ou fournisseur de service non opérationnel. Cela permet en particulier d'exclure ce fournisseur de la sélection par le procédé de sélection 100, à l'ensemble des positions géographiques, puisque l'étape de détermination 154 et l'étape de sélection 156 sont mises en œuvre, pour le fournisseur correspondant, uniquement lorsque la position géographique reçue lors de l'étape de réception 150 est comprise dans la région d'activation.

Selon un exemple, au moins l'une des régions d'activation est formée par une région couverte par aucune région d'activation des autres fournisseurs de la pluralité de fournisseurs prédéterminés.

Selon un autre exemple, l'une des régions d'activation est une région mondiale, excluant des zones, dans lesquelles l'utilisation d'un fournisseur spécifique est imposée par exemple par l'autorité étatique. Cette région d'activation mondiale est par exemple associée à l'un des fournisseurs de service, dit nouveau fournisseur. Par exemple, pour ce nouveau fournisseur, son utilisation est interdite au-dessus des Etats-Unis d'Amérique, parce que l'utilisation du fournisseur de service WAAS est imposée à cet endroit.

Selon un autre exemple, l'une des régions d'activation est une région mondiale, et lors de l'entraînement lors de la phase d'entraînement 110, le réseau de neurones 24 pour le fournisseur ayant cette région d'activation mondiale est entraîné pour interdire l'utilisation de ce fournisseur aux position géographiques dans lesquelles l'utilisation d'un fournisseur spécifique est imposée.

Lors de l'étape de détermination 154, le module de détermination 16 détermine l'indication relative à l'autorisation d'utilisation du ou des fournisseur(s), en utilisant le(s) réseau(x) de neurones 24. Le module de détermination 16 détermine ainsi le ou les fournisseur(s) autorisé(s).

De préférence, l'étape de détermination 154 est mise en œuvre par plusieurs réseaux de neurones 24, dont chaque réseau de neurones 24 est associé à l'un des fournisseurs de la pluralité de fournisseurs prédéterminés, fournissant l'indication respective pour le fournisseur auquel il est associé.

En particulier, l'étape de détermination 154 est mise en œuvre uniquement par le ou chaque réseau de neurones 24 associé à un fournisseur activé, présélectionné lors de l'étape de présélection 152.

En variante, l'étape de détermination 154 est mise en œuvre par tous les réseaux de neurones 24 du système de sélection 10.

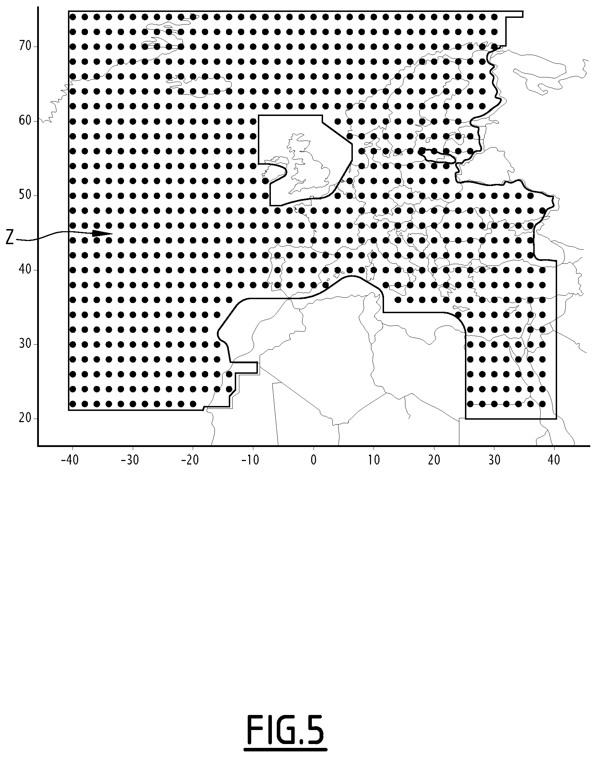

En référence à la figure 5, l'indication reçue en sortie du réseau de neurones 24 associé au système EGNOS est illustrée pour des positions géographiques indiquant l'autorisation d'utiliser le système EGNOS. Ces positions géographiques sont illustrées par des points noirs. Les positions géographiques auxquelles l'indication indique l'autorisation du système EGNOS forment en particulier une zone Z.

Pour obtenir l'indication respective pour la pluralité de positions géographiques, la phase d'exploitation 130 est de préférence répétée plusieurs fois. En particulier, les étapes 150 et 154, et optionnellement les étapes 152 et 156, sont répétées plusieurs fois. Cela est en particulier illustré par des flèches 158 sur la figure 2.

Selon l'invention, le ou chaque réseau de neurones 24 reçoit la position géographique comme variable d'entrée, et fournit l'indication comme variable de sortie, indiquant l'autorisation ou non d'utiliser le fournisseur correspondant à la position géographique.

Dans l'exemple qui suit, un exemple du fonctionnement de chaque réseau de neurones 24 est décrit, lorsqu'il comprend la couche d'entrée, la couche cachée, et la couche de sortie.

Le réseau de neurones 24 reçoit la position géographique par la couche d'entrée. La couche d'entrée, en particulier l'ensemble des nœuds de la couche d'entrée, par exemple formée par deux nœuds, normalise la position géographique, reçue en latitude et longitude, à des valeurs comprises entre -1 et 1, par exemple à partir des bornes inférieures et supérieures de la région d'activation du fournisseur associé au réseau de neurones 24 correspondant. Lorsque la région d'activation inclut une transition de longitude entre 180° Ouest et 180° Est, les longitudes sont par exemple préalablement converties entre 0 et 360°.

La couche cachée comprend N nœuds, où N est un nombre entier supérieur à 2. Chaque nœud de la couche cachée présente une fonction d'activation qui est de préférence une fonction sigmoïde. En particulier, la fonction d'activation de chaque nœud de la couche cachée est égale à : ${f}^{\left[1\right]} \left(x\right) = \frac{2}{1 + {e}^{- 2 x}} - 1$ où x est la position géographique, normalisée par la couche d'entrée.

Les nœuds de la couche cachée calculent les valeurs *h*_{*j*∈[1:*N*]} à partir des entrées normalisées *x*_{*i*∈[1:2]} formant les deux valeurs de la position géographique normalisée : où : ${h}_{j} = {f}^{\left[1\right]} \left({w}_{j , i}^{\left[1\right]}\times {x}_{i}+{b}_{j}^{\left[1\right]}\right)$
${w}_{j , i}^{\left[1\right]}$ est un poids déterminé du nœud *j* pour la composante *i* de la position géographique normalisée, et
${b}_{j}^{\left[1\right]}$ est un biais du nœud*j*.

La couche de sortie est par exemple formée par un nœud. Le nœud présente une fonction d'activation qui est de préférence une fonction logistique. En particulier, la fonction d'activation du nœud de la couche de sortie est égale à : ${f}^{\left[2\right]} \left(x\right) = \frac{1}{1 - {e}^{- x}}$ Par exemple, le nœud de la couche de sortie calcule une valeur y comme suit : $y = {f}^{\left[2\right]} \left({w}_{1 , j}^{\left[2\right]}\times {h}_{j}+{b}_{1}^{\left[2\right]}\right)$ où :
${w}_{1 , j}^{\left[2\right]}$ est un poids déterminé du nœud *j* de la couche cachée, et
${b}_{1}^{\left[2\right]}$ est un biais du nœud de la couche de sortie.

De préférence, le réseau de neurones 24 met en œuvre une fonction finale pour déterminer l'indication relative à l'autorisation d'utilisation du fournisseur, dénommé indication z, à partir de la valeur y. Par exemple, la fonction finale est comme suit : $z = \left\{\begin{matrix}0 si y \leq 0.5 \\ 1 si y > 0.5\end{matrix}\right.$

L'indication z égale à « 0 » indique l'autorisation d'utilisation du fournisseur auquel le réseau de neurones 24 est associé, et l'indication z égale à « 1 » indique l'interdiction d'utilisation du fournisseur.

De préférence, les poids ${w}_{j , i}^{\left[1\right]}$ et ${w}_{1 , j}^{\left[2\right]}$ et les biais ${b}_{j}^{\left[1\right]}$ et ${b}_{1}^{\left[2\right]}$ sont préalablement entraînées lors de la phase d'entraînement 110, par exemple en utilisant une méthode appelée méthode de rétropropagation du gradient pour le nombre N de nœuds de la couche cachée.

Lors de l'étape de sélection 156, le module de sélection 20 sélectionne au moins un fournisseur, parmi le ou chaque fournisseur autorisé, pour une navigation par satellite de l'aéronef.

Par exemple, le module de sélection 20 sélectionne le fournisseur en fonction de la qualité de service, et/ou d'une préférence prédéterminée, parmi les fournisseurs autorisés.

Lorsque la position géographique est la position courante de l'aéronef, le module de sélection 20 sélectionne un ou plusieurs fournisseurs.

Lorsque la position géographique est une position de destination, le module de sélection 20 sélectionne de préférence un seul fournisseur pour réaliser la navigation par satellite de l'approche de la position de destination. Selon un autre exemple, le module de sélection 20 sélectionne plusieurs fournisseurs si plusieurs fournisseurs sont autorisés.

On conçoit que le procédé de sélection 100 selon l'invention présente un grand nombre d'avantages.

En effet, le procédé de l'invention est très simple à mettre en œuvre, car l'utilisation d'au moins un réseau de neurones 24 permet de s'affranchir d'une base de données complexe pour obtenir l'indication s'il est autorisé d'utiliser un fournisseur donné à une position géographique donnée. En effet, le procédé de sélection 100 permet d'obtenir cette indication directement à partir du réseau de neurones 24, et cela également pour des positions géographiques pour lesquelles l'indication n'a pas été apprise au réseau de neurones 24 préalablement.

## Revendications

1. Procédé de sélection (100) d'au moins un fournisseur de service de navigation par satellite parmi une pluralité de fournisseurs prédéterminés, le procédé de sélection (100) étant mis en œuvre par ordinateur et comprenant :
- une étape de réception (150) d'une position géographique ;
- une étape de détermination (154) d'une indication relative à l'autorisation d'utilisation d'au moins un fournisseur de la pluralité de fournisseurs prédéterminés, l'étape de détermination (154) étant mise en œuvre par au moins un réseau de neurones artificiels (24) associé audit fournisseur, une variable d'entrée du réseau de neurones artificiels (24) étant la position géographique, une variable de sortie du réseau de neurones artificiels (24) étant ladite indication, l'indication étant choisie parmi l'autorisation de l'utilisation dudit fournisseur à ladite position géographique et l'interdiction de l'utilisation dudit fournisseur à ladite position géographique, lorsque l'indication indique l'autorisation de l'utilisation dudit fournisseur à ladite position géographique, le fournisseur étant appelé fournisseur autorisé ;
- une étape de sélection (156) d'au moins un fournisseur pour une navigation par satellite d'un aéronef, parmi le ou chaque fournisseur autorisé.

2. Procédé de sélection (100) selon la revendication 1, dans lequel chaque fournisseur est un fournisseur de service SBAS ou un fournisseur de service GNSS.

3. Procédé de sélection (100) selon la revendication 1 ou la revendication 2, dans lequel l'étape de détermination (154) est mise en œuvre par une pluralité de réseaux de neurones artificiels (24), chaque réseau de neurones artificiels (24) étant associé à un fournisseur respectif de la pluralité de fournisseurs prédéterminés, la variable de sortie étant l'indication pour ledit fournisseur.

4. Procédé de sélection (100) selon l'une quelconque des revendications précédentes, dans lequel le ou chaque réseau de neurones artificiels (24) comprend au moins une couche cachée comprenant une pluralité de nœuds, chaque nœud mettant en œuvre une fonction d'activation, la fonction d'activation étant de préférence formée par une fonction sigmoïde,
de préférence, dans lequel le ou chaque réseau de neurones artificiels (24) comprend en outre une couche de sortie mettant en œuvre une fonction d'activation formée par une fonction logistique.

5. Procédé de sélection (100) selon l'une quelconque des revendications précédentes, comprenant en outre une étape de présélection des fournisseurs (152), lors de laquelle au moins un fournisseur est obtenu à partir de la pluralité de fournisseurs prédéterminés, en fonction d'une région d'activation (R1, R2, ... R7) prédéfinie pour ce fournisseur, le ou chaque fournisseur étant dit fournisseur activé lorsque la position géographique est comprise dans la région d'activation respective (R1, R2, ... R7).

6. Procédé de sélection (100) selon la revendication 5, dans lequel l'étape de détermination (154) comprend la détermination de l'indication uniquement pour le ou chaque fournisseur activé, par le ou les réseau(x) de neurones artificiels (24) associé(s) audit(s) fournisseur(s) activé(s).

7. Procédé de sélection (100) selon la revendication 5 ou la revendication 6, dans lequel la région d'activation (R1, R2, ... R7) d'au moins un fournisseur de la pluralité de fournisseurs est dépourvue de positions géographiques ou est une région mondiale.

8. Procédé de sélection (100) selon l'une quelconque des revendications précédentes, dans lequel la position géographique est une position courante de l'aéronef ou une position de destination.

9. Procédé de sélection (100) selon l'une quelconque des revendications précédentes, comprenant une phase d'entraînement (110) du ou de chaque réseau de neurones artificiels (24) par apprentissage supervisé, comprenant la fourniture, au ou à chaque réseau de neurones artificiels (24), d'une pluralité de positions géographiques d'entraînement (A, B), et comprenant la fourniture de l'indication pour chaque position géographique d'entraînement (A, B).

10. Procédé de sélection (100) selon la revendication 9, dans lequel l'indication fournie lors de la phase d'entraînement (110) dépend, pour chaque position géographique d'entrainement (A, B), d'au moins un élément, de préférence de l'ensemble des éléments, suivant(s) :
- une contrainte d'utilisation de fournisseurs par au moins une autorité étatique à ladite position géographique d'entraînement (A, B) ;
- une disponibilité de corrections ionosphériques de signaux pour la position géographique d'entrainement (A, B) ;
- une région de couverture d'un ou plusieurs satellite(s) de l'un des fournisseurs de la pluralité de fournisseurs prédéterminés ;
- une région d'activation prédéfinie pour l'un des fournisseurs de la pluralité de fournisseurs prédéterminés.

11. Procédé de sélection (100) selon l'une quelconque des revendications précédentes, comprenant en outre une phase de vérification (120), comprenant :
- une étape de fourniture (140) au ou à chaque réseau de neurones artificiels (24) d'une pluralité de positions géographiques de vérification ;
- une étape d'obtention (142), pour chaque position géographique de vérification, de l'indication en sortie du réseau de neurones artificiels (24) correspondant ;
- une étape de comparaison (144) de chaque indication obtenue lors de l'étape d'obtention (142) avec une indication attendue pour la position géographique de vérification correspondante, pour obtenir un résultat de comparaison ;
- une étape de calcul (146) d'un taux de réussite du ou de chaque réseau de neurones artificiels (24) en fonction du résultat de comparaison.

12. Procédé de sélection (100) selon la revendication 11 prise en combinaison avec la revendication 5, dans lequel, lorsque le taux de réussite est inférieur à un taux prédéterminé pour le réseau de neurones artificiels (24) lors de l'étape de calcul (146), la région d'activation est divisée en plusieurs sous-régions, et dans lequel l'étape de fourniture (140), l'étape d'obtention (142) et l'étape de comparaison (144) sont répétées pour chaque sous-région.

13. Système de sélection (10) d'au moins un fournisseur de service de navigation par satellite parmi une pluralité de fournisseurs prédéterminés, le système de sélection (10) comprenant :
- un module de réception (12) configuré pour recevoir une position géographique ;
- un module de détermination (16) configuré pour déterminer une indication relative à l'autorisation d'utilisation d'au moins un fournisseur de la pluralité de fournisseurs prédéterminés, le module de détermination (16) comprenant au moins un réseau de neurones artificiels (24) associé audit fournisseur, une variable d'entrée du réseau de neurones artificiels (24) étant la position géographique, une variable de sortie du réseau de neurones artificiels (24) étant ladite indication, l'indication étant choisie parmi l'autorisation de l'utilisation dudit fournisseur à ladite position géographique et l'interdiction de l'utilisation dudit fournisseur à ladite position géographique, lorsque l'indication indique l'autorisation de l'utilisation dudit fournisseur à ladite position géographique, le fournisseur étant appelé fournisseur autorisé ;
- un module de sélection (20) configuré pour sélectionner au moins un fournisseur pour une navigation par satellite d'un aéronef, parmi le ou chaque fournisseur autorisé.

## Patentansprüche

1. Auswahlverfahren (100) zur Auswahl mindestens eines Anbieters eines Satellitennavigationsdienstes aus einer Mehrzahl von vordefinierten Anbietern, wobei das Auswahlverfahren (100) computerimplementiert ist und Folgendes umfasst:
- einen Schritt des Empfangens (150) einer geografischen Position;
- einen Schritt des Bestimmens (154) einer Angabe bezüglich der Genehmigung der Nutzung mindestens eines Anbieters der Mehrzahl von vordefinierten Anbietern, wobei der Schritt des Bestimmens (154) durch mindestens ein Netzwerk von künstlichen Neuronen (24) umgesetzt wird, das dem genannten Anbieter zugeordnet ist, wobei eine Eingangsvariable des Netzwerks von künstlichen Neuronen (24) die geografische Position ist, wobei eine Ausgangsvariable des Netzwerks von künstlichen Neuronen (24) die genannte Angabe ist, wobei die Angabe ausgewählt ist aus der Genehmigung der Nutzung des genannten Anbieters an der genannten geografischen Position und dem Verbot der Nutzung des genannten Anbieters an der genannten geografischen Position, wobei, wenn die Angabe die Genehmigung der Nutzung des genannten Anbieters an der genannten geografischen Position angibt, der Anbieter als autorisierter Anbieter bezeichnet wird;
- einen Schritt zur Auswahl (156) mindestens eines Anbieters für eine Satellitennavigation eines Luftfahrzeugs, unter dem oder jedem autorisierten Anbieter.

2. Auswahlverfahren (100) nach Anspruch 1, in dem jeder Anbieter ein Anbieter eines SBAS-Dienstes oder ein Anbieter eines GNSS-Dienstes ist.

3. Auswahlverfahren (100) nach Anspruch 1 oder Anspruch 2, in dem der Schritt des Bestimmens (154) durch eine Mehrzahl von Netzwerken von künstlichen Neuronen (24) umgesetzt wird, wobei jedes Netzwerk von künstlichen Neuronen (24) einem jeweiligen Anbieter der Mehrzahl von vordefinierten Anbietern zugeordnet ist, wobei die Ausgangsvariable die Angabe für den genannten Anbieter ist.

4. Auswahlverfahren (100) nach einem der vorhergehenden Ansprüche, in dem das oder jedes Netzwerk von künstlichen Neuronen (24) mindestens eine verborgene Schicht umfasst, die eine Mehrzahl von Knoten umfasst, wobei jeder Knoten eine Aktivierungsfunktion umsetzt, wobei die Aktivierungsfunktion vorzugsweise durch eine Sigmoidfunktion gebildet ist,
vorzugsweise, in dem das oder jedes Netzwerk von künstlichen Neuronen (24) ferner eine Ausgabeschicht umfasst, die eine Aktivierungsfunktion umsetzt, die durch eine logistische Funktion gebildet ist.

5. Auswahlverfahren (100) nach einem der vorhergehenden Ansprüche, ferner umfassend einen Schritt der Vorauswahl der Anbieter (152), während dessen mindestens ein Anbieter aus der Mehrzahl von vordefinierten Anbietern erhalten wird, in Abhängigkeit von einer für diesen Anbieter vordefinierten Aktivierungsregion (R1, R2, ... R7), wobei der oder jeder Anbieter als aktivierter Anbieter bezeichnet wird, wenn die geografische Position in der jeweiligen Aktivierungsregion (R1, R2, ... R7) enthalten ist.

6. Auswahlverfahren (100) nach Anspruch 5, in dem der Schritt des Bestimmens (154) das Bestimmen der Angabe ausschließlich für den oder jeden aktivierten Anbieter durch das oder die Netzwerk(e) von künstlichen Neuronen (24) umfasst, das/die dem/den genannten aktivierten Anbieter(n) zugeordnet ist/sind.

7. Auswahlverfahren (100) nach Anspruch 5 oder Anspruch 6, in dem die Aktivierungsregion (R1, R2, ... R7) mindestens eines Anbieters der Mehrzahl von Anbietern frei von geografischen Positionen ist oder eine weltweite Region ist.

8. Auswahlverfahren (100) nach einem der vorhergehenden Ansprüche, in dem die geografische Position eine aktuelle Position des Luftfahrzeugs oder eine Zielposition ist.

9. Auswahlverfahren (100) nach einem der vorhergehenden Ansprüche, umfassend eine Trainingsphase (110) des oder jedes Netzwerks von künstlichen Neuronen (24) durch überwachtes Lernen, umfassend die Bereitstellung, für das oder jedes Netzwerk von künstlichen Neuronen (24), einer Mehrzahl von geografischen Trainingspositionen (A, B), und umfassend die Bereitstellung der Angabe für jede geografische Trainingsposition (A, B).

10. Auswahlverfahren (100) nach Anspruch 9, in dem die während der Trainingsphase (110) bereitgestellte Angabe für jede geografische Trainingsposition (A, B) von mindestens einem Element, vorzugsweise von der Gesamtheit der folgenden Elemente, abhängt:
- eine Nutzungsbeschränkung von Anbietern durch mindestens eine staatliche Behörde an der genannten geografischen Trainingsposition (A, B);
- eine Verfügbarkeit von ionosphärischen Korrekturen von Signalen für die geografische Trainingsposition (A, B);
- eine Abdeckungsregion eines oder mehrerer Satellit(en) eines der Anbieter der Mehrzahl von vordefinierten Anbietern;
- eine für einen der Anbieter der Mehrzahl von vordefinierten Anbietern vordefinierte Aktivierungsregion.

11. Auswahlverfahren (100) nach einem der vorhergehenden Ansprüche, ferner umfassend eine Verifikationsphase (120), umfassend:
- einen Schritt der Bereitstellung (140) an das oder jedes Netzwerk von künstlichen Neuronen (24) einer Mehrzahl von geografischen Verifikationspositionen;
- einen Schritt des Erhaltens (142), für jede geografische Verifikationsposition, der Angabe am Ausgang des entsprechenden Netzwerks von künstlichen Neuronen (24);
- einen Schritt des Vergleichens (144) jeder während des Schritts des Erhaltens (142) erhaltenen Angabe mit einer erwarteten Angabe für die entsprechende geografische Verifikationsposition, um ein Vergleichsergebnis zu erhalten;
- einen Schritt des Berechnens (146) einer Erfolgsquote des oder jedes Netzwerks von künstlichen Neuronen (24) in Abhängigkeit von dem Vergleichsergebnis.

12. Auswahlverfahren (100) nach Anspruch 11 in Kombination mit Anspruch 5, in dem, wenn die Erfolgsquote während des Schritts des Berechnens (146) geringer als eine vordefinierte Quote für das Netzwerk von künstlichen Neuronen (24) ist, die Aktivierungsregion in mehrere Unterregionen unterteilt wird, und in dem der Schritt der Bereitstellung (140), der Schritt des Erhaltens (142) und der Schritt des Vergleichens (144) für jede Unterregion wiederholt werden.

13. Auswahlsystem (10) zur Auswahl mindestens eines Anbieters eines Satellitennavigationsdienstes aus einer Mehrzahl von vordefinierten Anbietern, wobei das Auswahlsystem (10) Folgendes umfasst:
- ein Empfangsmodul (12), das konfiguriert ist, um eine geografische Position zu empfangen;
- ein Bestimmungsmodul (16), das konfiguriert ist, um eine Angabe bezüglich der Genehmigung der Nutzung mindestens eines Anbieters der Mehrzahl von vordefinierten Anbietern zu bestimmen, wobei das Bestimmungsmodul (16) mindestens ein Netzwerk von künstlichen Neuronen (24) umfasst, das dem genannten Anbieter zugeordnet ist, wobei eine Eingangsvariable des Netzwerks von künstlichen Neuronen (24) die geografische Position ist, wobei eine Ausgangsvariable des Netzwerks von künstlichen Neuronen (24) die genannte Angabe ist, wobei die Angabe ausgewählt ist aus der Genehmigung der Nutzung des genannten Anbieters an der genannten geografischen Position und dem Verbot der Nutzung des genannten Anbieters an der genannten geografischen Position, wobei, wenn die Angabe die Genehmigung der Nutzung des genannten Anbieters an der genannten geografischen Position angibt, der Anbieter als autorisierter Anbieter bezeichnet wird;
- ein Auswahlmodul (20), das konfiguriert ist, um mindestens einen Anbieter für eine Satellitennavigation eines Luftfahrzeugs aus dem oder jedem autorisierten Anbieter auszuwählen.

## Claims

1. A method for selecting (100) at least one satellite navigation service provider from a plurality of predetermined providers, the selection method (100) being implemented by a computer and comprising:
- a step of receiving (150) a geographical position;
- a step of determining (154) an indication relating to the authorization to use at least one provider of the plurality of predetermined providers, the determination step (154) being implemented by at least one artificial neural network (24) associated with said provider, an input variable of the artificial neural network (24) being the geographical position, an output variable of the artificial neural network (24) being said indication, the indication being chosen from authorizing the use of said provider at said geographical position and prohibiting the use of said provider at said geographical position, when the indication indicates the authorization of the use of said provider at said geographical position, the provider being referred to as the authorized provider;
- a step of selecting (156) at least one provider for satellite navigation of an aircraft, from the or each authorized provider.

2. The selection method (100) according to claim 1, wherein each provider is an SBAS service provider or a GNSS service provider.

3. The selection method (100) according to claim 1 or claim 2, wherein the determination step (154) is implemented by a plurality of artificial neural networks (24), each artificial neural network (24) being associated with a respective one of the plurality of predetermined providers, the output variable being the indication for said provider.

4. The selection method (100) according to any of the preceding claims, wherein the or each artificial neural network (24) comprises at least one hidden layer comprising a plurality of nodes, each node implementing an activation function, the activation function preferably being formed by a sigmoid function,
preferably wherein the or each artificial neural network (24) further comprises an output layer implementing an activation function formed by a logistic function.

5. The selection method (100) according to any one of the preceding claims, further comprising a provider preselection step (152), during which at least one provider is obtained from the plurality of predetermined providers, as a function of an activation region (R1, R2, ... R7) predefined for this provider, the or each provider being said to be an activated provider when the geographical position lies within the respective activation region (R1, R2, ... R7).

6. The selection method (100) according to claim 5, wherein the determination step (154) comprises determining the indication only for the or each activated provider, by the artificial neural network(s) (24) associated with said activated provider(s).

7. The selection method (100) according to claim 5 or claim 6, wherein the activation region (R1, R2, ... R7) of at least one provider of the plurality of providers is devoid of geographical positions or is a global region.

8. The selection method (100) according to any of the preceding claims, wherein the geographical position is a current position of the aircraft or a destination position.

9. The selection method (100) according to any one of the preceding claims, comprising a phase of training (110) the or each artificial neural network (24) by supervised learning, comprising providing, to the or each artificial neural network (24), a plurality of geographical training positions (A, B), and comprising providing the indication for each geographical training position (A, B).

10. The selection method (100) according to claim 9, wherein the indication provided during the training phase (110) depends, for each geographical training position (A, B), on at least one element, preferably on all of the following elements :
- a constraint on the use of providers by at least one state authority at said geographical training position (A, B) ;
- an availability of ionospheric signal corrections for the geographical training position (A, B);
- a coverage region of one or more satellites of one of the plurality of predetermined providers;
- a predefined activation region for one of the plurality of predetermined providers.

11. The selection method (100) according to any of the preceding claims, further comprising a verification phase (120), comprising:
- a step of supplying (140) the or each artificial neural network (24) with a plurality of geographical verification positions ;
- a step of obtaining (142), for each geographical verification position, the output indication of the corresponding artificial neural network (24);
- a step of comparing (144) each indication obtained in the obtaining step (142) with an expected indication for the corresponding geographical verification position, to obtain a comparison result;
- a step of calculating (146) a success rate of the or each artificial neural network (24) as a function of the comparison result.

12. The selection method (100) according to claim 11 taken in combination with claim 5, wherein, when the success rate is less than a predetermined rate for the artificial neural network (24) in the calculation step (146), the activation region is divided into a plurality of sub-regions, and wherein the providing step (140), the obtaining step (142) and the comparison step (144) are repeated for each sub-region.

13. A system for selecting (10) at least one satellite navigation service provider from a plurality of predetermined providers, the selection system (10) comprising :
- a reception module (12) configured to receive a geographical position ;
- a determination module (16) configured to determine an indication relative to the authorization to use at least one provider from the plurality of predetermined providers, the determination module (16) comprising at least one artificial neural network (24) associated with said provider, an input variable of the artificial neural network (24) being the geographical position, an output variable of the artificial neural network (24) being said indication, the indication being selected from authorizing the use of said provider at said geographical position and prohibiting the use of said provider at said geographical position, when the indication indicates the authorization of the use of said provider at said geographical position, the provider being referred to as the authorized provider;
- a selection module (20) configured to select at least one provider for a satellite navigation of an aircraft, from the or each authorized provider.
